(19) Europäisches Patentamt
European Patent Office
Office européen des brevets

(11) **EP 1 852 730 A1**

(12) **EUROPEAN PATENT APPLICATION**
published in accordance with Art. 158(3) EPC

(43) Date of publication:
**07.11.2007 Bulletin 2007/45**

(51) Int Cl.:
***G02F 1/03*** (2006.01)

(21) Application number: **06731399.9**

(22) Date of filing: **07.04.2006**

(86) International application number:
**PCT/JP2006/307452**

(87) International publication number:
**WO 2006/109724 (19.10.2006 Gazette 2006/42)**

(84) Designated Contracting States:
**DE FR GB NL**

(30) Priority: **11.04.2005 JP 2005113629**

(71) Applicant: **Rohm, Co., Ltd.**
**Kyoto-shi, Kyoto 615-0045 (JP)**

(72) Inventor: **FUJIMORI, Yoshikazu,**
**c/o Rohm Co., Ltd.**
**Kyoto-shi Kyoto 615-8585 (JP)**

(74) Representative: **McLeish, Nicholas Alistair**
**Maxwell et al**
**Boult Wade Tennant**
**Verulam Gardens**
**70 Gray's Inn Road**
**London WC1X 8BT (GB)**

(54) **OPTICAL MODULATOR AND OPTICAL MODULATION SYSTEM**

(57)    A light modulation device that improves utilization efficiency of light is provided. The light modulation device (10) includes a light emitter (22), a Fabry-Perot type of resonator (16), and a controller (12) for applying a control voltage to the resonator (16). The resonator (16) includes a light modulating film (34) in which refractive index changes in accordance with an applied electric field, and comb-shaped electrodes (35,36) for applying the electrical field to the light modulating film (34). The light emitted from the light emitter (22) is incident to a light-incident plane, the light being substantially perpendicular to a direction of the electrical field applied to the light modulating film (34), and inclined from a direction normal to the light-incident plane.

FIG.2

**Description**

TECHNICAL FIELD

The present invention relates to a light modulation device and a light modulation system that use electro-optical effects.

BACKGROUND TECHNOLOGY

In recent years, as a recording method for large volumes, digital information recording systems that use the principle of holograms have become known (for example, Patent Document 1).

As a material for a spatial light modulator of a hologram recording device, a material having electro-optical effects such as, for example, lead lanthanum zirconate titanate (referred to below as PLZT) can be used. PLZT is a transparent ceramic having a composition of $(Pb_{1-y}La_y)(Zr_{1-x}Ti_x)O_3$. An electro-optical effect is a phenomenon in which, if an electrical field is applied to a material, polarization is produced in the material and the refractive index changes. If an electro-optical effect is used, by switching an applied voltage on and off, it is possible to switch the phase of the light. As a result, it is possible to apply a light modulating material, that has an electro-optical effect, to an optical shutter of the spatial light modulator or the like.

Conventionally, bulk PLZT has been widely used in applications to devices such as the optical shutter or the like (Patent Document 2). However, with the optical shutter using the bulk PLZT, it is difficult to respond to demand for miniaturization and integration, and demand for reduction in operating voltage and lowering of costs. Furthermore, since the bulk method includes processing at a high temperature of 1000 °C or more, after mixing metal-oxide, which is raw material, when applied to a device formation process, many constraints on selection of material, device structure, and the like, are added.

From this situation, instead of the bulk PLZT, tests are being considered in which thin film PLZT formed on a substrate is applied to an optical control device. Patent Document 3 describes a display device in which a PLZT film is formed on a transparent substrate, such as glass or the like, and a comb-shaped electrode is provided thereon. This display device has a configuration in which a polarizing plate is provided on both faces of a display board on which the PLZT film is formed. Here, by electrode terminals of each pixel being connected to an external drive circuit, a desired pixel can be driven, and a desired display can be made by transmitted light from a light source provided on one face of the display board.

Patent Document 1: Japanese Patent Application, Laid Open No. 2002-297008
Patent Document 2: Japanese Patent Application, Laid Open No. Hei5-257103
Patent Document 3: Japanese Patent Application, Laid Open No. Hei7-146657

[DISCLOSURE OF THE INVENTION]

[Problems to be solved by the invention]

Here, direction of incidence of light to an optical control device using a thin film PLZT is considered. In an optical control device as described in Patent Document 3, incident light is made incident from a direction normal to a light-incident plane of the optical control device. In cases in which the incident light is inclined from the direction normal to the light-incident plane, light path length inside the PLZT becomes long, and an operating voltage of the optical control device can be lowered. In the optical control device using the PLZT, a high operating voltage is necessary in order to obtain an adequate electro-optical effect, but from a practical point of view, it is desirable to be able to use as low an operating voltage as possible.

However, in cases in which the incident light is inclined from the direction normal to the light-incident plane, since part of the incident light is blocked by an electrode and cannot emerge, there is a problem in that aperture ratio becomes small, and utilization efficiency of the light deteriorates.

The present invention has been made in view of these circumstances, and a general purpose thereof is to provide a light modulation device and a light modulation system that improve light utilization efficiency.

MEANS FOR SOLVING THE PROBLEMS

In order to solve the abovementioned problems, in one embodiment of the present invention, a light modulation device comprises a light emitter, a light modulating film in which refractive index is changed in accordance with an applied electrical field, and an electrode pair for applying the electrical field to the light modulating film, wherein light emitted from the light emitter is incident on a light-incident plane, the light being substantially perpendicular to a direction of the electrical field applied to the light modulating film, and inclined from a direction normal to the light-incident plane.

According to this embodiment, since the light emitted from the light emitter is incident on a light-incident plane, being inclined from a direction normal to the light-incident plane, the light path inside the light modulating film becomes long, and it is possible to reduce the operating voltage of the light modulation device. Furthermore, by generating the electrical field between electrodes forming the electrode pair, and making the light incident from a direction substantially perpendicular to this electrical field, light absorbed by the electrodes is lessened. As a result, the aperture ratio becomes large, and it is possible to improve light utilization efficiency.

The electrode pair may generate an electrical field parallel to the light-incident plane, with regard to the light modulating film. The electrode pair may be formed from two comb-shaped electrodes provided with a plurality of comb teeth electrodes extending alternately to each other. In cases in which the electrode pair are comb-shaped electrodes, it is possible to preferably apply the electrical field to the light modulating film.

The light emitter may emit light having a direction of incidence substantially perpendicular to a normal line from the comb teeth electrodes of one of the comb-shaped electrodes to the comb teeth electrodes of the other of the comb-shaped electrodes.

The light modulating film may be formed of an electro-optic material in which the refractive index changes in proportion to the applied electric field to the power of 2. The electro-optic material may be lead zirconate titanate or lead lanthanum zirconate titanate.

A light reflective layer may be provided under the light modulating film. In such cases, since a reflection type of light modulation device is obtained, and the light path length inside the light modulating film can be lengthened, the operating voltage of the light modulation device can be reduced.

A controller may additionally be provided for modulating and outputting the light emitted from the light emitter, by applying a control voltage to the electrode pair.

A bias unit may additionally be provided for applying, to the electrode pair, a bias voltage in order to adjust resonance wavelength of the light modulation device. In such cases, since the resonance wavelength of the light modulation device can be shifted, it is possible to preferably adjust the resonance wavelength.

Another embodiment of the present invention also relates to the light modulation device. This device is a light modulation device that includes, on one chip, as a semiconductor integrated circuit device: a light modulating film in which refractive index is changed in accordance with an applied electrical field; an electrode pair for applying an electrical field to a light modulating film; a controller for modulating and outputting incident light by applying a control voltage to the electrode pair; and a bias unit for applying, to the electrode pair, a bias voltage in order to adjust a resonance wavelength of the light modulation device; wherein incident light on the light modulating film is incident perpendicularly to a direction of the electrical field applied to the light modulating film, and inclined from a direction normal to a light-incident plane. According to this embodiment, it is possible to realize a small-sized light modulation device. Furthermore, the light modulation device may additionally be provided with a light emitter. At this time the light modulation device is formed by providing the semiconductor integrated circuit device and the light emitter.

A terminal may be provided in order to input a signal that that gives an instruction to adjust the bias voltage. In such cases, feedback control of the bias voltage can be performed using a light detecting element.

Another embodiment of the present invention relates to a light modulation system. This light modulation system is provided with a light modulation device and a light receptor for receiving light emitted from the light modulation device. According to this embodiment, it is possible to realize, for example, a hologram recording device or a display device.

EFFECTS OF THE INVENTION

According to the light modulation device and the light modulation system related to the present invention, it is possible to improve light utilization efficiency.

BRIEF DESCRIPTION OF THE DRAWINGS

Fig. 1A is a plan view of a resonator;
Fig. 1B is a sectional view of the resonator along a line X - X' of Fig. 1A;
Fig. 2 is a view explaining direction of incidence of light;
Fig. 3 is a sectional view of the resonator along a line Y - Y' of Fig. 2;
Fig. 4 is a sectional view of the resonator along a line X - X' of Fig. 2;
Fig. 5 is a view schematically showing an operation state of a light modulation device;
Fig. 6 is a view showing a relationship between reflectance R and wavelength λ of light incident on the resonator;

Fig. 7 is a view showing a configuration of the light modulation device in which resonance wavelength $\lambda_m$ can be adjusted;

Fig. 8 is a view showing a configuration of the light modulation device in which a bias voltage Vb is set by automatic control;

Fig. 9A is a plan view of a spatial light modulation device;

Fig. 9B is a sectional view along a line A-A' of the spatial light modulation device shown in Fig. 9A; and

Fig. 10 is a view showing a hologram recording device using the spatial light modulation device.

DESCRIPTION OF REFERENCE SYMBOLS

10 light modulation device, 12 controller, 16 resonator, 22 light emitter, 30 substrate, 32 first reflective layer, 33 electrode pair, 34 light modulating film, 35 comb-shaped electrode, 36 comb-shaped electrode, 40 second reflective layer, 42 first dielectric film, 44 second dielectric film

BEST MODE FOR CARRYING OUT THE INVENTION

An outline of a light modulation device related to an embodiment will be explained. This light modulation device is provided with a light modulating film for changing refractive index according to application of an electrical field. By giving a control voltage to the light modulating film, and controlling the electrical field applied to the light modulating film, it is possible to change the intensity of light emitted from the light modulation device. In the present embodiment, light emitted from the light emitter is incident on a light-incident plane, substantially perpendicularly to a direction of the electrical field applied to the light modulating film, and inclined from a direction normal to the light-incident plane. For example, in cases of a light modulation device in which two parallel electrodes are formed on the light modulating film or in the light modulating film, by making the light incident from a direction substantially perpendicular to the electrical field, light absorbed by the electrodes decreases and utilization efficiency of the light is improved. Furthermore, by making the light incident at an inclination from the direction normal to the light-incident plane, the light path length inside the light modulating film becomes long, and the operating voltage decreases.

By recording and detecting the light emitted from the light modulation device by a recording medium, a light detecting element, or the like, utilization can be realized in various applications. The light modulation device related to the present embodiment includes a transmission type of modulation device in which light is transmitted and emitted, and a reflection type modulation device in which the light is reflected and emitted. For the embodiment of the present invention, the reflection type of light modulation device is explained below.

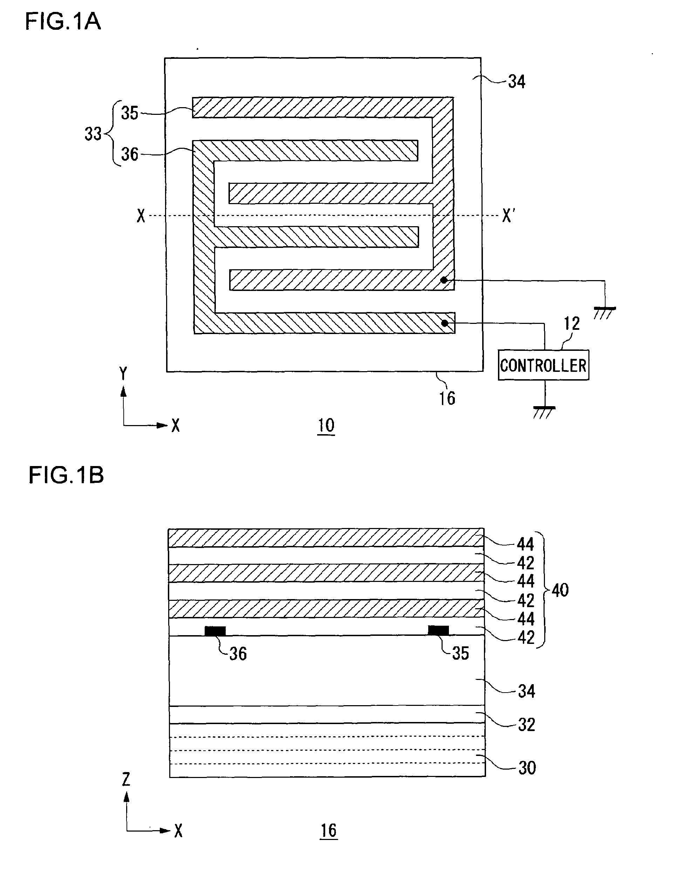

Fig. 1A and Fig. 1B are views showing a configuration of the light modulation device 10 related to the present embodiment. The light modulation device 10 is provided with a controller 12, a resonator 16, and the light emitter, not shown in the figures.

Fig. 1A is a plan view of the resonator 16. Fig. 1B is a sectional view of the resonator 16 along a line X - X' of Fig. 1A. The resonator 16 includes a substrate 30, a first reflective layer 32, the light modulating film 34, an electrode pair 33, and the second reflective layer 40. The substrate 30, the first reflective layer 32, the light modulating film 34, the electrode pair 33, and the second reflective layer 40 are formed as an laminated structure. The electrode pair 33 is formed on the same surface, and is configured from two comb-shaped electrodes 35 and 36 provided with a plurality of comb teeth electrodes extending alternately and differently to each other. The comb-shaped electrodes 35 and 36 may be arranged to be mutually opposing, with a configuration in which one of the comb teeth electrodes of one of the comb-shaped electrodes is disposed between two of the comb teeth electrodes of the other of the comb-shaped electrodes. Furthermore, Fig. 1A is a view looking through a layer including the comb-shaped electrodes 35 and 36 of the light modulation device 10.

The resonator 16 is formed integrally with the substrate 30. As material of the substrate 30, flat glass, silicon, or the like, may preferably be used in the surface. For example, if the substrate 30 is formed of silicon, a switching element may be arranged on the substrate and the resonator 16 may be formed thereon.

The first reflective layer 32 is formed on the substrate 30. Metallic material such as, for example, Pt or the like, can preferably be used as a material for the first reflective layer 32. The thickness of the first reflective layer 32 is approximately 200 nm. When the first reflective layer 32 is formed of Pt, reflectance of the first reflective layer 32 is approximately 50% to 80%.

The light modulating film 34 is arranged on an upper surface of the first reflective layer 32. As a material of this light modulating film 34, solid electro-optic material is selected, in which refractive index changes in accordance with the applied electrical field. PLZT, PZT (lead zirconate titanate), $LiNbO_3$, GaA-MQW, SBN $((Sr, Ba)Nb_2O_6)$, or the like, can be used as this type of electro-optic material, and PLZT in particular is preferably used.

The film thickness t of the light modulating film 34 is decided according to wavelength and incident angle of incident light, and when, for example, the incident light is red light in the neighborhood of 650 mm, it is desirable that the film thickness should be 500 nm or greater. By the film thickness being 500 nm or greater, it is possible to obtain adequate change in optical film thickness.

The comb-shaped electrodes 35 and 36 are provided on the upper surface of the light modulating film 34. The comb-shaped electrodes 35 and 36 are arranged such that the respective comb teeth electrodes are disposed alternately, with the longitudinal side of the comb teeth electrodes mutually opposing. The comb-shaped electrodes 35 and 36 are formed such that the width of the short side of the comb teeth electrodes is approximately 1 $\mu$m, and the interval of the longitudinal side of the opposing comb teeth electrodes is approximately 1 $\mu$m. Furthermore, the ratio of the longitudinal side to the short side may be 5 to 1 or greater.

The comb-shaped electrodes 35 and 36 can be formed of, for example, $IrO_2$, $SrRuO_3$, $La_{0.5}Sr_{0.5}CoO_3$, or the like. When formed of $IrO_2$, the film thickness is approximately 200 nm. Since there is a tradeoff relationship between resistance value and transmittance, the thickness of the comb-shaped electrodes 35 and 36 may be decided experimentally. The comb-shaped electrodes 35 and 36 can be formed by depositing $IrO_2$ by a spattering technique, then baking the comb-shaped electrodes 35 and 36 by photolithography, and performing etching.

The second reflective layer 40 is formed on the upper surface of the light modulating film 34 on which the comb-shaped electrodes 35 and 36 are arranged. The second reflective layer 40 is formed by a dielectric multilayer film, and a first dielectric film 42 and a second dielectric film 44 that have different refractive indices n are layered alternately. As a combination of materials of the first dielectric film 42 and the second dielectric film 44, $SiO_2$ (n = 1.48), $Si_3N_4$ (n = 2.0) can be used.

In cases in which the dielectric multilayer film is formed of a silicon dioxide film and a silicon nitride film, a manufacturing process and a manufacturing apparatus for a silicon semiconductor integrated circuit can be used.

The dielectric multilayer film can be formed by a plasma CVD method (Chemical Vapor Deposition). The $SiO_2$ film can be grown in conditions of a temperature of 200 °C in an atmosphere of TEOS and $O_2$, and the $Si_3N_4$ film can be preferably grown in conditions of a temperature of 200 °C in an atmosphere of $SiH_4$ and $NH_3$. Furthermore, the dielectric multilayer film may be formed by an ion-beam sputtering technique.

Respective film thicknesses t1 and t2 of the first dielectric film 42 and the second dielectric film 44 may be designed to be 1/4 of the wavelength of light incident on the resonator 16. That is, if the wavelength of the light incident on the resonator 16 is $\lambda$ and the refractive index of the dielectric film is n, the film thickness t of one layer of each dielectric film is adjusted so as that t = $\lambda$/(n x 4).

For example, in cases where a red color laser of wavelength $\lambda$ = 633 nm is used in the light modulation device 10, when the first dielectric film 42 has $SiO_2$ (N = 1.48) as a material, the film thickness t1 of the first dielectric film 42 is approximately t1 = 633/(4 x 1.48) = 106 nm. Furthermore, when $Si_3N_4$ (n = 2.0) is used as a material, the film thickness t2 of the second dielectric film 44 is approximately t2 = 633/(4 x 2) = 79 nm. The film thicknesses t1 and t2 of the dielectric films that make up the second reflective layer 40 need not necessarily be designed to be strictly $\lambda$/(n x 4).

As a material for the dielectric films, $TiO_3$ (n = 2.2) may be used instead of silicon nitride film. In such cases, the film thickness t2 of the second dielectric film 44 is approximately t2 = 633/(4 x 2.2) = 72 nm.

The reflectance R2 of the light from the light modulating film 34 incident on the second reflective layer 40 is designed to be equal to the reflectance R1 of the light from the light modulating film 34 incident on the first reflective layer 32. The reflectance R1 is determined according to metallic material used in the first reflective layer 32, and when Pt is selected, is 50% to 80%.

Accordingly, at this time the reflectance R2 is designed to be 50% to 80%. The reflectance R2 of the second reflective layer 40 can be adjusted by the material and film thickness of the first dielectric film 42 and the second dielectric film 44. In the present embodiment, as shown in Fig. 1B, the second reflective layer 40 is built up of 3 layers of each of the first dielectric film 42 and the second dielectric film 44, alternately stacked. In the second reflective layer 40, the first dielectric film 42 and the second dielectric film 44 may also be stacked in a reverse order. Furthermore, in order to perform fine adjustment of the reflectance R2, a third dielectric film may additionally be stacked.

The second reflective layer 40 may also be a half-mirror formed of a metallic thin film. In such cases, the manufacturing process can be simplified in comparison to cases in which the dielectric multilayer film is formed.

In the present embodiment, the comb-shaped electrodes 35 and 36 form the electrode pair 33. The electrical potential of the comb-shaped electrode 35 is fixed, for example, to a ground potential, and the potential of the comb-shaped electrode 36 is controlled by the controller 12.

The controller 12 can generate and output a control voltage Vcnt that modulates and outputs the light incident on the light modulation device 10. The control voltage Vcnt has a signal that takes two values, a high level VH or a low level VL.

The light emitter (not shown in the figure) radiates light on the resonator 16. The light emitter may include a laser source. The light emitted from the light emitter is incident on a light-incident plane, and is substantially perpendicular to a direction of the electrical field applied to the light modulating film 34, and inclined from a direction normal to the light-incident plane.

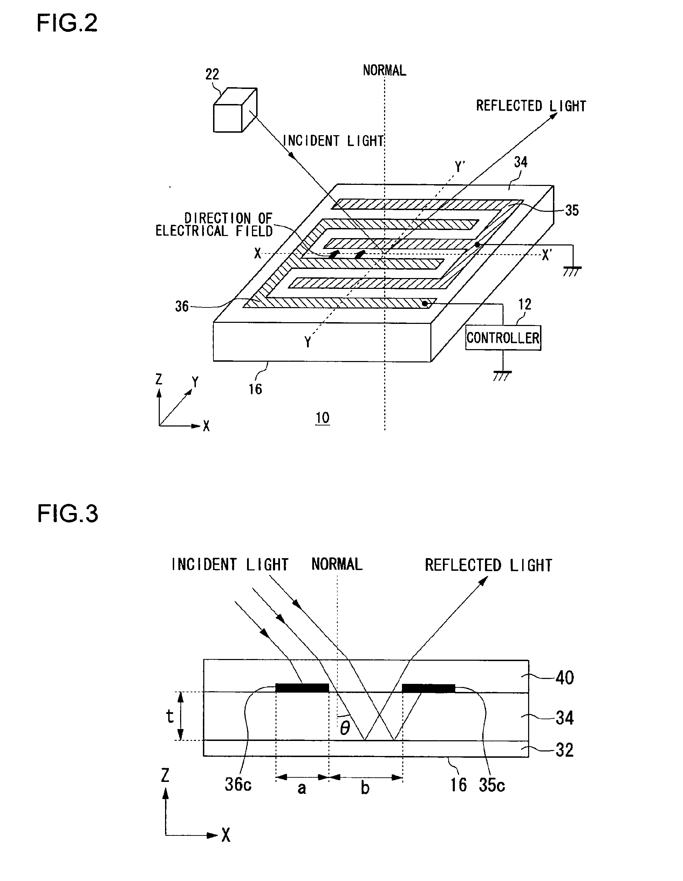

Fig. 2 is a view explaining direction of incidence of the light. In this figure, component elements that are the

**EP 1 852 730 A1**

same as in Fig. 1 are given the same reference symbols. Furthermore, for simplicity, component elements such as the second reflective layer 40, and the like, are omitted.

In cases in which the control voltage Vcnt is applied from the controller 12 to the comb-shaped electrode 36, the electrical field is generated from a longitudinal side of the comb teeth electrodes of the comb-shaped electrode 36 in a direction towards a longitudinal side of the comb teeth electrodes of the comb-shaped electrode 35. Accordingly, the direction of the electrical field in Fig. 2 is substantially parallel to the Y-axis. At this time, the direction of the electrical field and the light-incident plane are parallel.

In the present embodiment, as shown in Fig. 2, the light emitter 22 emits light having a direction of incidence that is substantially perpendicular to a normal from the longitudinal side of the comb teeth electrodes of one of the comb-shaped electrodes to the longitudinal side of the comb teeth electrodes of the other of the comb-shaped electrodes.

The control voltage Vcnt applied to the resonator 16 changes according to light path length of the light passing through the light modulating film 34. By having the light incident at an inclination from a direction normal to the light-incident plane of the resonator 16, since the light path length of the light passing the light modulating film 34 of the resonator 16 becomes long, the control voltage Vcnt can be decreased.

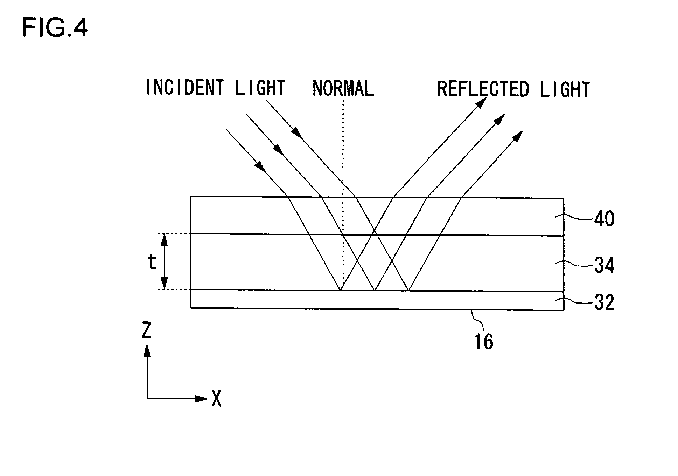

Effects of having the incident light perpendicular to the direction of the electrical field are now explained. In order to do this, referring below to Fig. 3 and Fig. 4, a light path when the incident light is not perpendicular to the direction of the electrical field and a light path when the incident light is perpendicular to the direction of the electrical field are compared, and respective aperture ratios are shown.

Fig. 3 is a sectional view of the resonator 16 along a line Y - Y' of Fig. 2. For simplicity, component elements, such as the substrate 30 and the like, are omitted. Here, the light is assumed to be parallel to the YZ plane, and to be inclined from a direction normal to the light-incident plane of the resonator 16. In such cases, as shown in Fig. 3, since part of the light that is incident between the comb teeth electrodes 35c and 36c of the respective comb-shaped electrodes 35 and 36 is absorbed by the comb teeth electrodes 36c after being reflected by the first reflective layer 32, reflected light is diminished. If the width of the comb teeth electrodes of the comb-shaped electrodes 35 and 36 is a, the interval of the comb teeth electrodes is b, the film thickness of the light modulating film 34 is t, and the angle of incidence of the light is θ, the aperture ratio AR of the resonator 16 in this case is

$$AR = (b - 2t \tan \theta)/(a + b) \quad \text{Equation 1}$$

As may be understood from Equation 1, the larger the angle of incidence θ is made, to lengthen the light path, the smaller the aperture ratio AR becomes, and the utilization efficiency of the light deteriorates. Furthermore, the thickness of the comb-shaped electrodes 35 and 36 is not considered here, but if the thickness is considered, the aperture ratio becomes even smaller.

Next, an explanation is given concerning the light path in cases in which the incident light is substantially perpendicular to the direction of the electrical field, related to the present embodiment. Fig. 4 is a sectional view of the resonator 16 along a line X-X' of Fig. 2. The light is assumed to be parallel to the XZ plane, and to be inclined from a direction normal to the light-incident plane of the resonator 16. At this time, the incident light is substantially perpendicular to the direction of the electrical field. In this case, the light that is incident between the respective comb teeth electrodes of the comb-shaped electrodes 35 and 36 is reflected by the first reflective layer 32 and is emitted from between each of the comb teeth electrodes without being absorbed by the comb-shaped electrodes 35 and 36. In this case, the aperture ratio AR of the resonator 16 is:

$$AR = b/(a + b) \quad \text{Equation 2}$$

As may be understood from Equation 2, since the aperture ratio AR does not depend on the angle of incidence θ, even if the light is incident at an inclination from a direction normal to the light-incident plane, the aperture ratio AR is constant. That is, it is possible to reduce the control voltage Vcnt, while maintaining the utilization efficiency of the light.

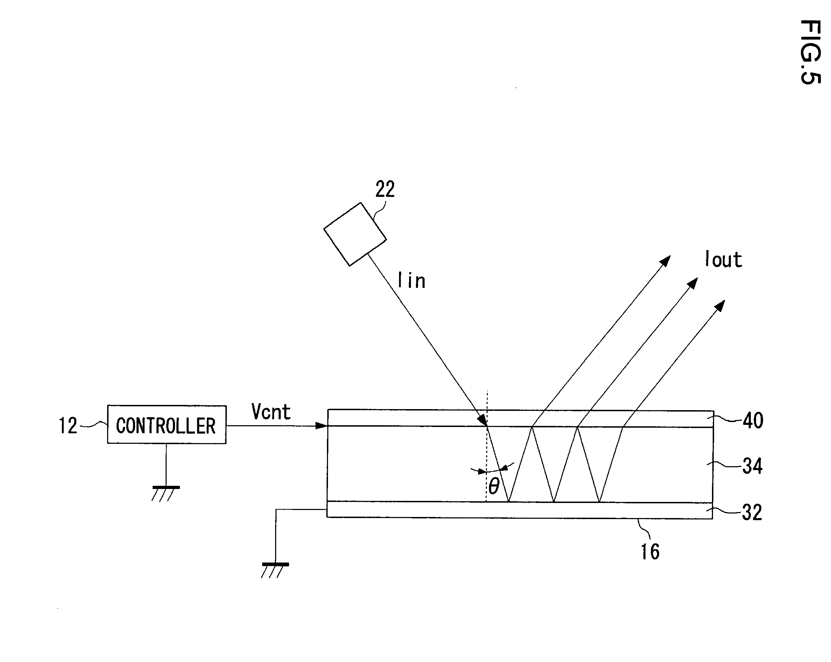

An explanation is now given concerning operation of the light modulation device 10 configured as described above. Fig. 5 schematically shows an operation state of the light modulation device 10. In this figure, component elements that are the same as in Fig. 1 are given the same reference symbols. Furthermore, for simplicity, component elements, such as the electrode pair 33 and the like, are omitted.

A laser of intensity Iin from the light emitter is incident on the resonator 16. The first reflective layer 32, the light modulating film 34, and the second reflective layer 40 of the resonator 16 make up a Fabry-Perot type of resonator, a

6

part of the incident light is confined, and that part is reflected. If the intensity of the incident laser is Iin, and the intensity of the laser that is reflected by the resonator 16 is Iout, the reflectance ratio R of the resonator 16 is defined by R = Iout/Iin.

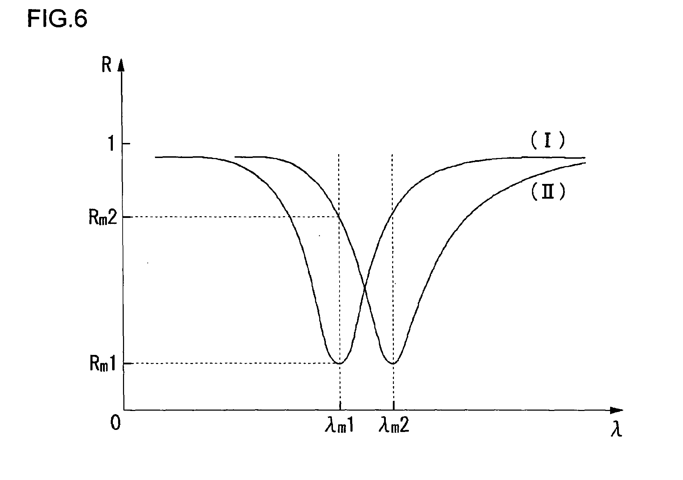

Fig. 6 is a view showing a relationship between reflectance R and wavelength $\lambda$ of the light incident on the resonator 16. The resonance wavelength $\lambda_m$ of the Fabry-Perot type resonator, composed of the first reflective layer 32, the light modulating film 34, and the second reflective layer 40, is given by:

$$\lambda_m = (2nt \cos \theta)/m \qquad \text{Equation 3}$$

Here, m is order, n is the refractive index of the light modulating film 34, t is the film thickness of the light modulating film 34, and $\theta$ is the angle of incidence of the laser on the light modulating film 34. As shown in Fig. 6, the reflectance R of the resonator 16 takes a minimum value at the resonance wavelength $\lambda_m$.

As described above, the refractive index n of the light modulating film 34 is dependent on the electrical field E applied to the electrode pair. Now, with the first reflective layer 32 as a ground potential, if the control voltage Vcnt is applied to the comb-shaped electrode 36, in the light modulating film 34, the electrical field E = Vcnt/t is applied from the comb-shaped electrode 36 in a direction towards the comb-shaped electrode 35. In cases in which PLZT is used as the light modulating film 34, a relationship is established between the change amount An in the refractive index n of the light modulating film 34 and the applied electrical field E, according to Equation 4.

$$\Delta n = 1/2 \times (n)^3 \times R \times E^2 \qquad \text{Equation 4}$$

Here, R is an electro-optic constant (Kerr constant).

(I) shown in Fig. 6 is a reflective property when voltage is not applied to the resonator 16. At this time, the resonance wavelength of the resonator 16 is $\lambda_m 1$. When voltage is applied to the resonator 16, the refractive index of the light modulating film 34 changes, and the resonance wavelength shifts from $\lambda_m 1$ to $\lambda_m 2$. $\lambda_m 2$ has a value larger than $\lambda_m 1$. The reflective property at this time is shown by (II) in Fig. 6.

If the wavelength of the laser incident on the resonator 16 is taken as $\lambda_m 1$, and the control voltage Vcnt is changed from the ground voltage to a certain voltage value v1, by the resonance wavelength shifting, the reflectance R of the resonator 16 changes from Rm1 to Rm2.

Here, the ratio of the reflectance Ron, when the voltage is applied, to the reflectance Roff, when the voltage is not applied, Ron/Roff, is defined as an on-off ratio. When the intensity Iin of the incident light is constant, the intensity Iout of the reflected light is proportional to the reflectance. Accordingly, when the on-off ratio is large, the intensity Iout of the reflected light can be accurately controlled, meaning that the utilization efficiency of the light is also high.

The closer the reflectance R1 in the first reflective layer 32 and the reflectance R2 in the second reflective layer 40 are, the lower the reflectance R of the resonator 16 at the resonance wavelength $\lambda_m$ becomes. Accordingly, by adjusting the number of layers and the material of the dielectric multilayer film of the second reflective layer 40, as described above, and by designing the reflectance R1 at the first reflective layer 32 and the reflectance R2 at the second reflective layer 40 to be equal, the reflectance R at Off time can be set low, and the on-off ratio can be high.

In this way, in the light modulation device 10 related to the present embodiment, by changing the electrical field applied to the light modulating film 34, it is possible to change the reflectance, and to realize a light switch element for controlling the intensity Iout of the reflected light.

The present invention has been explained above, based on the embodiment. This embodiment is an example, and a person skilled in the art will understand that various modified examples of combinations of various component elements and various processes thereof are possible, and that such modified examples are within the scope of the present invention.

In the present embodiment, an explanation has been given for cases in which the comb-shaped electrodes 35 and 36 are formed on the light modulating film 34, but the comb-shaped electrodes 35 and 36 may also be formed so that the whole or a part thereof is embedded in the light modulating film 34. In such cases, since a region, in which the electrical field applied to the light modulating film 34 is strong, increases, optical film thickness change can be increased.

The embodiment has a configuration in which the control voltage Vcnt is applied from the controller 12 to the comb-shaped electrode 36, but the control voltage Vcnt may be applied with a bias voltage Vb superimposed.

Since the resonance wavelength $\lambda_m$ of the resonator 16 is given by Equation 3, it is proportion to the film thickness t of the light modulating film 34. Therefore, if there is variability in the film thickness t of the light modulating film 34, there is a possibility of variability also in the resonance wavelength $\lambda_m$.

As described above, the resonance wavelength $\lambda_m$ can be changed by applying the voltage to the resonator 16. Thus, by superimposing the bias voltage Vb on the control voltage Vcnt, and making the resonance wavelength $\lambda_m$ adjustable, it is possible to correct the variations in the film thickness t.

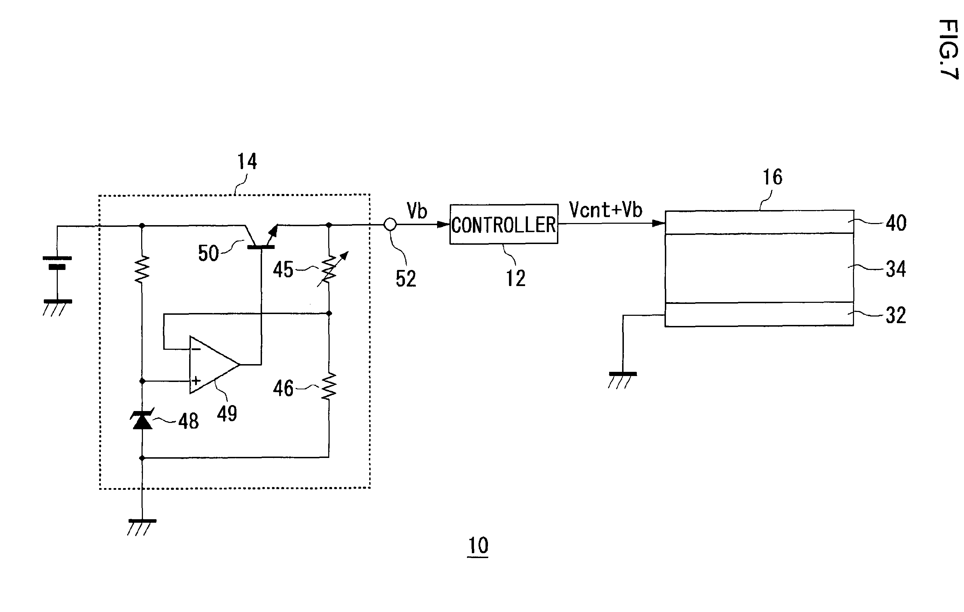

Fig. 7 is a view showing a configuration of the light modulation device 10 in which the resonance wavelength $\lambda_m$ can be adjusted. In this figure, component elements that are the same as in Fig. 1 are given the same reference symbols. Furthermore, for simplicity, component elements such as the electrode pair 33 and the like are omitted. The light modulation device 10 of Fig. 7 is provided with the resonator 16, the controller 12, and a bias unit 14 for generating the bias voltage Vb in order to adjust the resonance wavelength $\lambda_m$.

The bias unit 14 shown in Fig. 7 is a constant voltage circuit for generating the bias voltage Vb. The bias unit 14 is provided with a variable resistor 45, a resistor 46, a constant voltage diode 48, an operational amplifier 49, and a transistor 50.

When a power supply voltage is supplied to the bias unit 14, the bias voltage Vb = Vz (1 + R1/R2) is outputted at an output terminal 52 of the bias unit 14. R1 is the resistance value of the variable resistor 45, R2 is the resistance value of the resistor 46, and Vz is the zener voltage of the constant voltage diode 48. The bias voltage Vb is a constant voltage that does not vary with the value of the power supply voltage, and is adjustable by changing the resistance value of the variable resistor 45.

A preferable value of the bias voltage Vb that is superimposed on the control voltage Vcnt can be obtained by measuring the film thickness t of the light modulating film 34. The resonance wavelength $\lambda_m$ of the Fabry-Perot type resonator is given by Equation 3. Therefore, if the film thickness t of the light modulating film 34 is known, the resonance wavelength $\lambda_m$ of the resistor can be obtained. From the difference $\Delta\lambda$ between the resonance wavelength $\lambda_m$ and a target value of the resonance wavelength, a change amount An of the light modulating film 34 necessary to shift the resonance wavelength $\lambda_m$ to the target value can be obtained. Since the relationship of Equation 4 is established between the change amount An of the refractive index n of the light modulating film 34 and the electrical field E that is applied, it is possible to obtain the electrical field E necessary for shifting the resonance wavelength $\lambda_m$ to the target value. Since the electrical field and the voltage have a relationship E = V/t, the preferable value of the bias voltage Vb applied to the resonator 16 can be obtained.

In this way, even in cases in which there are variations in the film thickness t of the light modulating film 34, by adjusting the variable resistance 45 of the bias unit 14, a preferable bias voltage Vb can be superimposed on the control voltage Vcnt, and the resonance wavelength $\lambda_m$ can be corrected.

The bias unit 14 shown in Fig. 7 is one example of the constant voltage circuit, and the bias voltage Vb may be generated using another constant voltage circuit or a regulator. Furthermore, the setting of the bias voltage Vb may be performed in a state in which the control voltage Vcnt has a low level VL, by having a laser incident on the resonator 16, and adjusting the variable resistor 45, while monitoring the intensity of the reflected light. At this time, the variable resistor 45 is adjusted so that the intensity of the reflected light has a minimum value. In this case, it is possible to correct the resonance wavelength $\lambda_m$ with high accuracy.

As described above, when the voltage is applied to the resonator 16, the resonance wavelength $\lambda_m$ of the resonator 16 shifts to become larger. Furthermore, with regard to the Fabry-Perot type resonator, since the resonance wavelength $\lambda_m$ is given by Equation 3, when the film thickness t is thick, the resonance wavelength $\lambda_m$ is large, and when the film thickness t is thin, the resonance wavelength $\lambda_m$ is small. Accordingly, in order to adjust the resonance wavelength $\lambda_m$, it is preferable to form the light modulating film 34 so that the film is thinner than the film thickness t at which the target resonance wavelength $\lambda_m$ occurs.

The bias voltage Vb may be set by automatic control. Even in cases in which automatic control of the bias voltage Vb is carried out, in cases in which a property of the light modulating film 34 changes with time, and in cases in which the wavelength of the incident laser changes, it is possible to perform control so as to have a preferable resonance wavelength $\lambda_m$. For example, a ferroelectric substance such as PLZT or the like is known to have an imprint phenomenon in which, by continuously applying a voltage in the same direction, a polarization amount generated in the ferroelectric substance is put in memory.

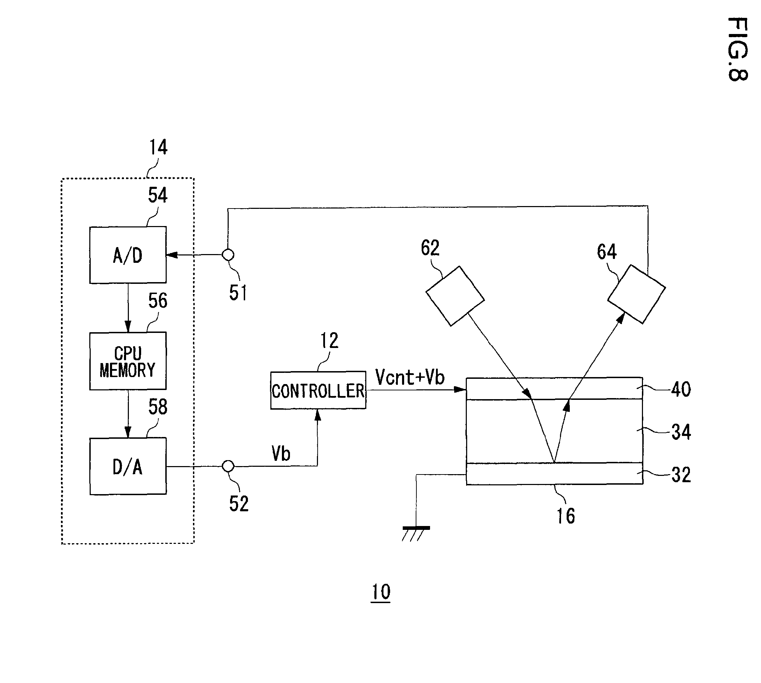

Fig. 8 is a view showing a configuration of a light modulation device 10 in which the bias voltage Vb is set by automatic control. The bias unit 14 shown in Fig. 8 is provided with an A/D converter 54, a CPU memory 56, and a D/A converter 58.

An explanation is now given concerning operation of the light modulation device 10 shown in Fig. 8. The light modulation device 10 of Fig. 8 monitors the intensity of the light reflected from the resonator 16, and adjusts the bias voltage Vb by performing feedback control.

Light from a laser source 62, which is a light emitter, is radiated on the resonator 16 and reflected, and is converted to an electrical signal by a light detecting element 64 such as a hot diode, a CCD, or the like. The light detecting element 64, which is a light receptor, is arranged at a position at which detection of the laser reflected from the resonator 16 is possible. For example, the reflected light may be bifurcated by a beam splitter, not shown in the figure, and made incident on the light detecting element 64.

The electrical signal generated by the light detecting element 64 is inputted from an input terminal 51 to the bias unit 14. The electrical signal is converted into a digital value by the A/D converter 54, and is taken in by the CPU memory 56. The CPU memory 56 controls the bias voltage Vb so that the intensity of the light detected by the light detecting element 64 is minimal. A signal outputted from the CPU memory 56 is converted into an analog value by the D/A converter 58, and the bias voltage Vb is outputted at the output terminal 52.

By performing automatic control of the bias voltage Vb, it is possible to control the resonance wavelength $\lambda_m$ of the resonator 16 to always have a value the same as the wavelength of the laser source 62.

The bias unit 14 shown in Fig. 8 may be integrated on the substrate 30 shown in Fig. 1. In the light modulation device 10 related to the present embodiment, opaque material can be used in the substrate 30, in order to compose a reflective type of modulator. For example, if silicon is used for the substrate 30, the controller 12 and the bias unit 14 are formed on the substrate 30, and the light modulation device 10, provided with the controller 12, the bias unit 14, and the resonator 16, can be formed on one chip, as a semiconductor integrated circuit device.

The light modulation device related to the present embodiment may be provided with plural groups of resonators and controllers. For example, the spatial light modulation device can be composed by disposing the resonator 16 shown in Fig. 1 in a matrix form.

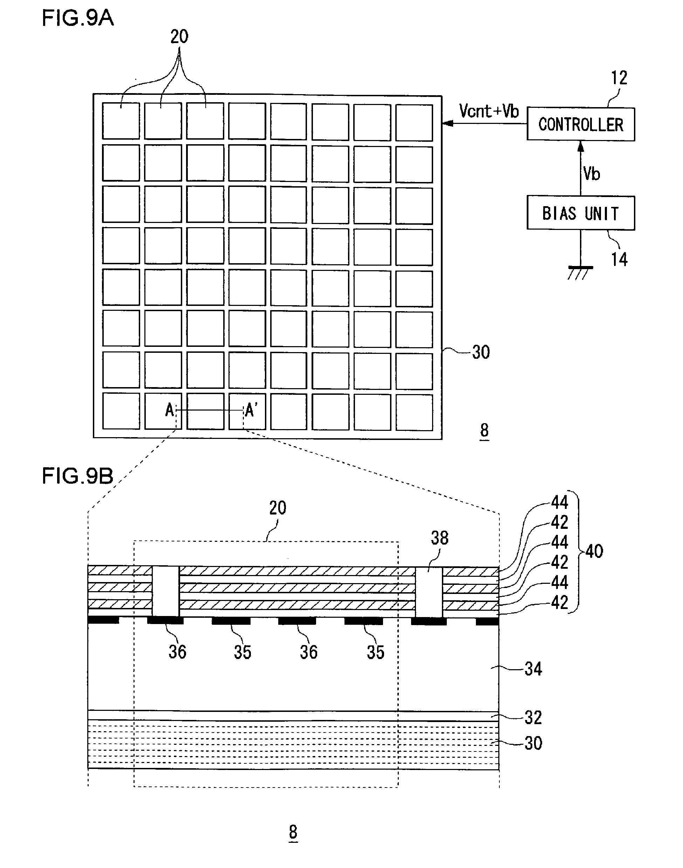

Fig. 9A and Fig. 9B are views showing the spatial light modulation device in which the resonator 16 is disposed in a matrix form. Fig. 9A is a plan view of the spatial light modulation device 8. The spatial light modulation device 8 is provided with a plurality of pixels 20 disposed in a two dimensional form of 8 rows and 8 columns on the substrate 30. The pixels 20 are composed with a size of approximately 20μm x 20μm.

Fig. 9B is a sectional view of the spatial light modulation device shown in Fig. 9A along a line A - A'. Component elements of the light modulation device 34 and the like are almost the same as for the resonator 16 shown in Fig. 1, but differ in that the formation is such that the comb-shaped electrodes 35 and 36 are embedded in the light modulating film 34. The resonator 16 may be formed in this way.

As shown in Fig. 9B, the comb-shaped electrode 36 is drawn to the outside by a via and a wire 38. Al or the like may preferably be used as material for the wire 38. A protective film may additionally be formed on the upper surface of the wire 38.

In the spatial light modulation device 8, the control voltage Vcnt is given by the controller 12 for each of the pixels 20, and the reflectance can be controlled for each pixel 20.

The spatial light modulation device 8 may be provided with a bias unit 14. The configuration of the bias unit 14 and setting method of the bias voltage Vb are the same as the configuration and method explained using Fig. 7 and Fig. 8. When variations in film thickness are small between each of the pixels 20 in the spatial light modulation device 8, since a common bias voltage Vb may be superimposed on each pixel 20, at least one bias unit 14 may be provided for one spatial light modulation device 8.

The bias unit 14 may be provided for each pixel 20. In such cases, it is possible to perform correction of the resonance wavelength $\lambda_m$ with higher accuracy.

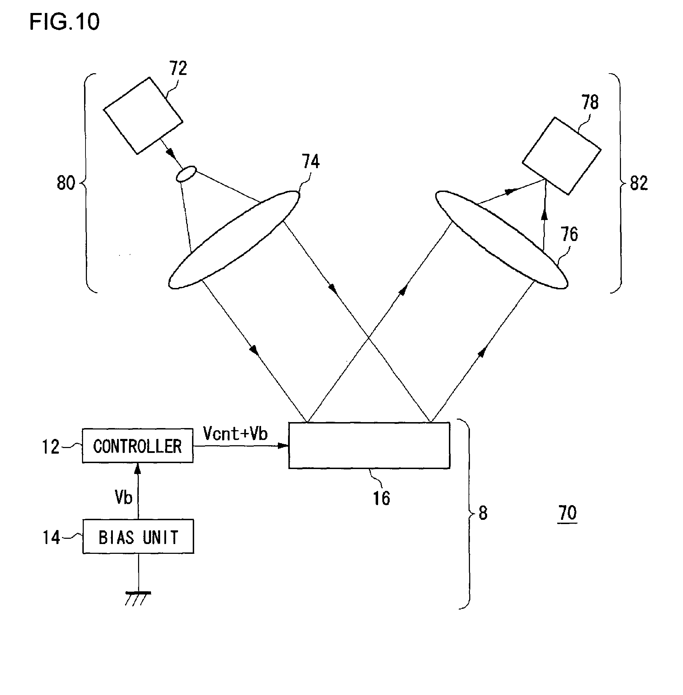

It is possible to compose various light modulation systems using the spatial light modulation device 8. Fig. 10 is a view showing a hologram recording device 70 using the spatial light modulation device 8. The hologram recording device 70 is provided with a light emitter 80, a light receptor 82, and the spatial light modulation device 8. The light emitter 80 is provided with a laser source 72 and a beam expander 74. The light receptor 82 is provided with a Fourier transform lens 76, and a recording medium 78.

In the hologram recording device 70, the laser emitted from the laser source 72 is split into two beams by a beam splitter, not shown in the figure. Among these, one of the beams is used as a reference beam, and is guided into the recording medium 78. The other of the beams has its beam diameter enlarged by the beam expander 74, and is radiated to the spatial light modulation device 8 as a parallel beam.

The beam radiated on the spatial light modulation device 8 is reflected from the spatial light modulation device 8 as a signal beam having a different intensity for each pixel. This signal beam passes through the Fourier transform lens 76, undergoes a Fourier transformation, and is condensed into the recording medium 78. Inside the recording medium 78, light paths of the reference beam and the signal beam, including a hologram pattern, intersect and form an optical interference pattern. The overall optical interference pattern is recorded in the recording medium 78 as a change in refractive index (refractive index grating).

An explanation has been given in the above description concerning cases in which the spatial light modulation device 8 is used in the hologram recording device 70, but this does not imply any limitation thereto, and a display device, an optical communication switch, an optical communication modulator, an optical computation device, and an encryption circuit or the like can also be used.

An explanation has been given in the above description concerning a reflection type of light modulation device as an embodiment; however, the light modulation device related to the present embodiment may also be a transmission type of light modulation device. For example, in a light modulation device provided with a polarization plate and the light modulating film in which the refractive index changes in accordance with the applied electrical field, by making light, which is incident on the light modulating film, substantially perpendicular to the direction of the electrical field applied to the light modulating film, and at an inclination from a direction normal to a light-incident plane, the light path length can be made long and the aperture ratio can be enlarged. As a result, it is possible to lower operational voltage, and to provide a transmission type of light modulation device in which the utilization efficiency of the light is improved.

Industrial applicability

According to the light modulation device and the light modulation system related to the present invention, it is possible to improve light utilization efficiency.

**Claims**

1. A light modulation device comprising:

    a light emitter;
    a light modulating film in which refractive index changes in accordance with an applied electrical field; and
    an electrode pair for applying the electrical field to the light modulating film; wherein
    light emitted from the light emitter is made incident on a light-incident plane, the light being substantially perpendicular to a direction of the electrical field applied to the light modulating film, and inclined from a direction normal to the light-incident plane.

2. A light modulation device according to claim 1, wherein the electrode pair generates the electrical field parallel to the light-incident plane, with respect to the light modulating film.

3. A light modulation device according to claim 1 or claim 2, wherein the electrode pair comprises two comb-shaped electrodes comprising a plurality of comb teeth electrodes extending alternately to each other.

4. A light modulation device according to claim 3, wherein the light emitter emits light having a direction of incidence substantially perpendicular to a normal line from the comb teeth electrodes of one of the comb-shaped electrodes to the comb teeth electrodes of the other of the comb-shaped electrodes.

5. A light modulation device according to any of claims 1 through 4, wherein the light modulating film is formed of an electro-optic material in which refractive index changes in proportion to the applied electric field to the power of 2.

6. A light modulation device according to claim 5, wherein the electro-optic material is lead zirconate titanate or lead lanthanum zirconate titanate.

7. A light modulation device according to any of claims 1 through 6, comprising:

    a light reflective layer under the light modulating film.

8. A light modulation device according to any of claims 1 through 7, further comprising:

    a controller for modulating and outputting light emitted from the light emitter, by applying a control voltage to the electrode pair.

9. A light modulation device according to claim 8, further comprising
    a bias unit for applying, to the electrode pair, a bias voltage in order to adjust resonance wavelength of the light modulation device.

10. A light modulation device, formed on one chip as a semiconductor integrated circuit device, the light modulation device comprising:

    a light modulating film in which refractive index changes in accordance with an applied electrical field;
    an electrode pair for applying the electrical field to the light modulating film;
    a controller for modulating and outputting incident light by applying a control voltage to the electrode pair; and

a bias unit for applying, to the electrode pair, a bias voltage for adjusting resonance wavelength of the light modulation device; wherein
incident light on the light modulating film is made incident perpendicularly to a direction of the electrical field applied to the light modulating film, and inclined from a direction normal to a light-incident plane.

11. A light modulation device according to claim 10, further comprising:

a terminal for inputting a signal that gives an instruction to adjust the bias voltage.

12. A light modulation system comprising:

a light modulation device in accordance with any of claims 1 through 9; and
a light receptor for receiving light emitted from the light modulation device.

FIG.1A

FIG.1B

## FIG.2

## FIG.3

FIG.4

INCIDENT LIGHT    NORMAL    REFLECTED LIGHT

t

40
34
32
16

Z

X

FIG.5

FIG.6

FIG.7

FIG.8

FIG.9A

FIG.9B

FIG.10

CONTROLLER 12

Vcnt+Vb

16

8

70

Vb

BIAS UNIT 14

72

74

80

78

76

82

<table>
<tr><td colspan="2">**INTERNATIONAL SEARCH REPORT**</td><td>International application No.<br>PCT/JP2006/307452</td></tr>
</table>

A. CLASSIFICATION OF SUBJECT MATTER
*G02F1/03*(2006.01)

According to International Patent Classification (IPC) or to both national classification and IPC

B. FIELDS SEARCHED

Minimum documentation searched (classification system followed by classification symbols)
*G02F1/03*(2006.01)

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 60-6918 A  (Matsushita Electric Industrial Co., Ltd.),<br>14 January, 1985 (14.01.85),<br>Full text; all drawings<br>(Family: none) | 1,2,5,6,8,12<br>3,4,7,9-11 |
| Y | JP 56-5523 A  (Xerox Corp.),<br>21 January, 1981 (21.01.81),<br>Full text; all drawings<br>& US 4281904 A1        & EP 21754 A1 | 1-12 |

☒ Further documents are listed in the continuation of Box C.          ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>04 July, 2006 (04.07.06) | Date of mailing of the international search report<br>18 July, 2006 (18.07.06) |
|---|---|
| Name and mailing address of the ISA/<br>Japanese Patent Office | Authorized officer |
| Facsimile No. | Telephone No. |

Form PCT/ISA/210 (second sheet) (April 2005)

| **INTERNATIONAL SEARCH REPORT** | International application No. |
|---|---|
| | PCT/JP2006/307452 |

C (Continuation).   DOCUMENTS CONSIDERED TO BE RELEVANT

| Category* | Citation of document, with indication, where appropriate, of the relevant passages | Relevant to claim No. |
|---|---|---|
| Y | Simes R. J. et al., 'Electrically tunable Fabry-Perot mirror using multiple quantum well index modulation', Applied Physics Letters, Vol.53, No.8, August 1988, pages 637 to 639 | 7-11 |
| Y | JP 2002-311401 A  (TDK Corp.), 23 October, 2002 (23.10.02), Full text; all drawings (Family: none) | 3,4,7-11 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002297008 A
- JP 5257103 A
- JP 7146657 A